# EUROPÄISCHE PATENTSCHRIFT

(11) **EP 2 567 114 B1**
(45) Veröffentlichungstag und Bekanntmachung des Hinweises auf die Patenterteilung: **31.10.2018**
(21) Anmeldenummer: 11709098.5
(22) Anmeldetag: 10.03.2011
(51) Int. Cl.: F16C 19/50, F04C 29/00

(54) **EXZENTERLAGER**
ECCENTRIC BEARING
PALIER EXCENTRIQUE

(30) Priorität: 05.05.2010 DE 102010028584
(43) Veröffentlichungstag der Anmeldung: 13.03.2013
(73) Patentinhaber: Robert Bosch GmbH, 70442 Stuttgart (DE)
(72) Erfinder: HAECKER, Juergen, 71701 Schwieberdingen (DE); ALAZE, Norbert, 71706 Markgroeningen (DE)
(86) Internationale Anmeldenummer: PCT/EP2011/053608
(87) Internationale Veröffentlichungsnummer: WO 2011/138078

(56) Entgegenhaltungen:
- FR-A1- 2 637 660
- JP-A- 61 215 480

## Beschreibung

### Stand der Technik

Die Erfindung betrifft ein Exzenterlager mit den Merkmalen des Oberbegriffs des Anspruchs 1. Solche gattungsgemäße Exzenterlager sind z.B. aus JP 61-215480 A und FR 2 637 660 A vorbekannt.

Das erfindungsgemäße Exzenterlager ist insbesondere für ein elektrohydraulisches Kolbenpumpenaggregat einer hydraulischen Bremsanlage eines Kraftfahrzeugs vorgesehen. Solche Pumpenaggregate werden zur Erzeugung eines hydraulischen Bremsdrucks zu einer Bremsbetätigung in schlupfgeregelten- und/oder Fremdkraft-Bremsanlagen verwendet.

Bekannte Exzenterlager weisen eine Exzenterwelle auf, die einstückig oder in anderer Weise starr und exzentrisch an einer Motorwelle eines Elektromotors oder an einer Ausgangswelle eines Getriebes, das mit dem Elektromotor antreibbar ist, angebracht sind. Auf der Exzenterwelle ist ein Wälzlager mit einem die Exzenterwelle konzentrisch umschließenden Lagerring und mit Wälzkörpern angeordnet, die in einem Spalt zwischen der Exzenterwelle und dem Lagerring um die Welle herum, üblicherweise aber nicht zwingend äquidistant, angeordnet sind. Die Wälzkörper sind üblicherweise Rollen oder Nadeln, es können allerdings auch andere Wälzkörper, beispielsweise Kugeln sein. Der Lagerring kann als Außenring aufgefasst werden, ein Innenring kann vorhanden, beispielsweise auf die Exzenterwelle aufgepresst sein. Allerdings ist kein Innenring notwendig, die Wälzkörper können auch unmittelbar auf der Exzenterwelle wälzen. Außen am Lagerring liegen ein oder mehrere Pumpenkolben des Pumpenkolbenaggregats mit ihren Stirnenden an. Die Pumpenkolben werden beispielsweise mit Federn von außen in Anlage an den Lagerring gedrückt.

Bei einem Drehantrieb führt die Exzenterwelle aufgrund ihrer Exzentrizität eine Bewegung auf einer Kreisbahn aus und dreht sich dabei um sich selbst. Aufgrund der Bewegung der Exzenterwelle auf der Kreisbahn bewegt sich auch der Lagerring auf einer bzw. auf derselben Kreisbahn und treibt dadurch die außen an ihm anliegenden Pumpenkolben zur gewünschten Hubbewegung an, um Bremsflüssigkeit oder allgemein Fluid durch abwechselndes Ansaugen und Verdrängen zu fördern, wie es von Kolbenpumpen bekannt ist. Aufgrund seiner Wälzlagerung dreht sich der Lagerring nicht mit der Exzenterwelle mit.

In elektrohydraulischen Kolbenpumpenaggregaten für hydraulische Bremsanlagen von Kraftfahrzeugen wandeln die Exzenterlager eine Drehbewegung eines Elektromotors oder einer Ausgangswelle eines Getriebes in eine Hubbewegung zum Antrieb der Pumpenkolben.

### Offenbarung der Erfindung

Das erfindungsgemäße Exzenterlager mit den Merkmalen des Anspruchs 1 weist eine drehend antreibbare Welle auf, auf der ein Wälzlager mit einem die Welle umschließenden Lagerring und mit in einem Spalt zwischen der Welle und dem Lagerring um die Welle herum angeordneten Wälzkörpern angordnet ist, wobei die Wälzkörper äquidistant angeordnet sein können, aber nicht müssen. Die Welle des erfindungsgemäßen Exzenterlagers konzentrisch zu ihrer Drehachse vorgesehen, auch wenn denkbar und nicht von der Erfindung ausgeschlossen ist, dass die Welle exzentrisch zu ihrer Drehachse ist. Anstelle oder ggf. zusätzlich zu einer Exzentrizität der Welle ist der Lagerring exzentrisch zur Welle und die Wälzkörper weisen verschiedene Durchmesser auf entsprechend einer unterschiedlichen Spaltbreite zwischen der Welle und dem Lagerring aufgrund der Exzentrizität des Lagerrings zur Welle. Die Wälzkörper weisen Durchmesser auf, die so groß sind wie die Breite des Spalts zwischen dem Lagerring und der Welle an der Umfangsstelle, an der sich der jeweilige Wälzkörper befindet.

Bei einem Drehantrieb der Welle wälzen die Wälzkörper auf der Welle und im Lagerring und laufen um die Welle um wie es von Wälzlagern bekannt ist. Dabei drücken die Wälzkörper mit großem Durchmesser den Lagerring von der Welle ab und auf der gegenüberliegenden Seite, wo sich die Wälzkörper mit kleinem Durchmesser befinden, nähert sich der Lagerring der Welle. Es läuft sozusagen die sich ändernde Spaltbreite zusammen mit den Wälzkörpern um die drehend angetriebene Welle um, d.h. die breiteste, die engste und jede andere Spaltbreite laufen mit den Wälzkörpern um die Welle um. Der Lagerring bewegt sich auf einer Kreisbahn um die Welle mit einer Exzentrizität zur Welle. Eine Drehbewegung der Welle wird in eine Hubbewegung eines oder mehrerer außen am Lagerring anliegender Pumpenkolben gewandelt. Die Wälzkörper laufen mit einer langsameren Umlaufgeschwindigkeit um die Welle um als es einer Drehgeschwindigkeit der Welle entspricht, ebenso verringert sich die Geschwindigkeit, mit der sich der Lagerring auf der Kreisbahn bewegt. Das erfindungsgemäße Exzenterlager weist eine Geschwindigkeitsuntersetzung auf, eine Umlaufgeschwindigkeit der Exzentrizität des Lagerrings ist bei drehfestem Lagerring kleiner als eine Drehgeschwindigkeit der Welle. Die Geschwindigkeitsuntersetzung hat den Vorteil, dass ein Antrieb mit höherer Drehzahl möglich ist, was bei gleicher Leistung die Verwendung eines kleineren und leichteren Elektromotors ermöglicht.

Um sicherzustellen, dass bei einem Drehantrieb der Welle die Wälzkörper auf der Welle und im Lagerring wälzen und um die Welle umlaufen, liegen die Wälzkörper erfindungsgemäß mit einer Vorspannung an der Welle und am Lagerring an. Die Vorspannung kann niedrig sein um einen Verschleiß gering zu halten. Die Vorspannung ist so hoch zu wählen, dass das Wälzen der Wälzkörper auf der Welle und im Lagerring und ihr Umlauf um die Welle sichergestellt sind. Die Wälzkörper können Schlupf beim Wälzen aufweisen, vorzugsweise wird die Vorspannung allerdings so groß gewählt, dass es keinen oder einen allenfalls vernächlässigbaren Schlupf gibt.

Ein weiterer Vorteil des erfindungsgemäßen Exzenterlagers ist dessen einfacher und kostengünstiger Aufbau.

Das erfindungsgemäße Exzenterlager ist insbesondere zur erläuterten Verwendung in einem elektrohydraulischen Kolbenpumpenaggregat zur Erzeugung eines Bremsdrucks in einer hydraulischen Bremsanlage eines Kraftfahrzeugs vorgesehen, wo es die Drehbewegung eines Elektromotors in eine Hubbewegung zum Antrieb von Pumpenkolben wandelt. Die Erfindung ist allerdings nicht auf diese Verwendung beschränkt sondern richtet sich darüber hinaus auf das Exzenterlager als solchem.

Die Unteransprüche haben vorteilhafte Ausgestaltungen und Weiterbildungen der im Anspruch 1 angegebenen Erfindung zum Gegenstand.

Um die Vorspannung zu bewirken, mit der die Wälzkörper an der Welle und am Lagerring des Exzenterlagers anliegen, sieht Anspruch 2 ein Untermaß des Lagerrings vor. Der die Wälzkörper umschließende Lagerring ist also elastisch verformt. Da der Lagerring nicht nach Art einer Fassung in einer zylindrischen Lageraufnahme aufgenommen ist, wenn das Exzenterlager in einem elektrohydraulischen Kolbenpumpenaggregat verwendet wird, kann er sich unter elastischer Biegung zu einer von einer Kreisform abweichenden Ringform verformen: An den Stellen, an denen der Lagerring an den Wälzkörpern anliegt, weist er eine stärkere Krümmung auf, dazwischen eine schwächere. Auf diese Weise ist eine Elastizität des Lagerrings zur Erzeugung der gewünschten Vorspannung, mit der er von außen gegen die Wälzkörper und die Wälzkörper nach innen gegen die Welle drückt, problemlos möglich. Sofern aus Stabilitäts- oder Verschleißgründen erforderlich kann ein den Lagerring umschliessender zusätzlicher Aussenring mit größerer Dicke vorgesehen werden.

Bei der Verwendung des Exzenterlagers in einem elektrohydraulischen Kolbenpumpenaggregat drücken die beiden Pumpenkolben in der Mitte ihres Hubs mit gleicher Kraft entgegengesetzt gegen den Lagerring. Die erfindungsgemäße Vorspannung stellt sicher, dass die Wälzkörper trotzdem gegen die Welle und den Lagerring gedrückt werden und um die drehende Welle umlaufen.

Die Ansprüche 3 und 4 sehen einen elastischen Ring, beispielsweise einen O-Ring vor, um die Vorspannung zu bewirken. Der elastische Ring kann in einer umlaufenden Nut in der Welle, in einer umlaufenden Nut in einem, mehreren oder allen Wälzkörpern und/oder in einer umlaufenden Nut auf der Innenseite des Lagerrings einliegen. Die Nut ist nicht zwingend für die Erfindung und es kann beispielsweise auch ein elastischer Ring, der einen Wälzkörper ohne Nut umschliesst, in einer Nut im Lagerring und/oder der Welle laufen oder es ist ein alle Wälzkörper gemeinsam umschliessender elastischer Ring vorgessehen, der in einer Nut in den Wälzkörpern und/oder im Lagerring seitlich geführt ist. Der elastische Ring steht über eine Wälzfläche der Welle, des oder der Wälzkörper und/oder des Lagerrings und drückt dadurch elastisch gegen die Wälzkörper, die Welle und/oder den Lagerring, wodurch die gewollte Vorspannung erzielt und ein Wälzen und Umlaufen der Wälzkörper bei einem Drehantrieb der Welle sichergestellt wird. Die Wälzfläche ist die Umfangsfläche der Welle, der Wälzkörper und die Innenumfangsfläche des Lagerrings.

Anspruch 5 sieht einen Wälzkörperkäfig vor, der die Wälzkörper in ihrem Abstand voneinander hält. Die Wälzkörper können äqudistant oder mit verschiedenen Abständen angeordnet sein. Der Wälzkörperkäfig stellt einen gemeinsamen Umlauf aller Wälzkörper sicher. Er ist insbesondere von Vorteil, wenn nur ein oder jedenfalls nicht alle Wälzkörper einen elastischen Ring aufweist, weil dessen dadurch bewirkter Umlauf vom Wälzkörperkäfig auf die anderen Wälzkörper übertragen wird.

### Kurze Beschreibung der Zeichnung

Die Erfindung wird nachfolgend anhand eines in der Zeichnung dargestellten Ausführungsbeispiels näher erläutert. Es zeigen:

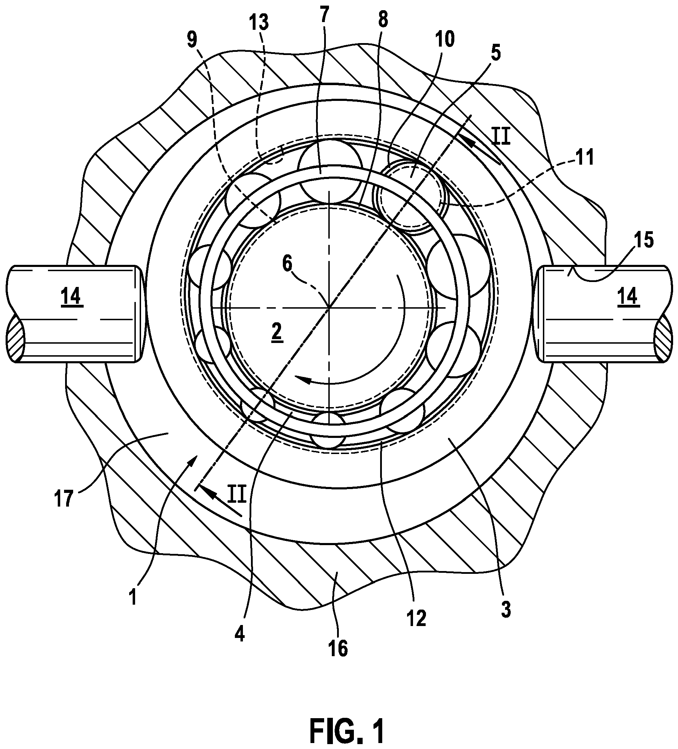

- Figur 1: ein erfindungsgemäßes Exzenterlager in Stirnansicht; und
- Figur 2: einen Achsschnitt des Exzenterlagers gemäß Linie II-II in Figur 1.

### Ausführungsform der Erfindung

Das in der Zeichnung dargestellte erfindungsgemäße Exzenterlager 1 weist eine Welle 2 auf, die von einem Lagerring 3 umschlossen ist. In einem Spalt 4 zwischen dem Lagerring 3 und der Welle 2 sind Rollen als Wälzkörper 5 um die Welle 2 herum angeordnet. Der Lagerring 3 und die Wälzkörper 5 können, ggf. zusammen mit der Welle 2, als Wälzlager aufgefasst werden. Die Welle 2 ist mit einem in der Zeichnung nicht sichtbaren weil hinter der Zeichenebene befindlichen Elektromotor drehend um ihre Achse 6, die zugleich ihre Drehachse ist, antreibbar. Die Welle 2 weist keine Exzentrizität auf. Sie kann beispielsweise das Ende einer Motorwelle des Elektromotors sein.

Der Lagerring 3 ist exzentrisch zur Welle 2, eine Breite des Spalts 4 zwischen dem Lagerring 3 und der Welle 2 ändert sich in Umfangsrichtung. Ausgehend von einer größten Spaltbreite, die in der Zeichnung oben rechts ist, verkleinert sich die Spaltbreite in beiden Umfangsrichtungen zu einer kleinsten Spaltbreite, die sich der größten Spaltbreite gegenüber, in der Zeichnung also unten links, befindet.

Die Rollen, die die Wälzkörper 5 bilden, weisen verschiedene Durchmesser entsprechend der unterschiedlichen Spaltbreite auf. Die Durchmesser der Wälzkörper 5 sind jeweils so groß wie der Spalt 4 zwischen dem Lagerring 3 und der Welle 2 an der Stelle breit ist, an der sich der jeweilige Wälzkörper 5 befindet.

Bei einem drehenden Antrieb der Welle 2 wälzen die Wälzkörper 5 auf einem Umfang der Welle 2 und laufen dabei mit einer kleineren Umlaufgeschwindigkeit um die Welle 2 um als es deren Drehgeschwindigkeit entspricht. Zusammen mit dem Wälzkörper 5 mit dem größten Durchmesser läuft die größte Spaltbreite des Spalts 4 zwischen dem Lagerring 3 und der Welle 2 um. Ebenso läuft die kleinste Spaltbreite des Spalts 4 zwischen dem Lagerring 3 und der Welle 2 mit dem Wälzkörper 5 mit dem kleinsten Durchmesser um die Welle 2 um. Anders ausgedrückt läuft jede Spaltbreite und eine Exzentrizität des Lagerrings 3 in Bezug auf die Welle 2 bei einem Drehantrieb der Welle 2 um die Welle 2 um, wobei die Umlaufgeschwindigkeit der Exzentrizität kleiner als die Drehgeschwindigkeit der Welle 2 ist wenn der Lagerring 3 nicht mitdreht. Der Lagerring 3 bewegt sich auf einer Kreisbahn um die Achse 6 der Welle 2, die zugleich ihre Drehachse ist, wobei eine Geschwindigkeit der Kreisbewegung des Lagerrings 3 kleiner als die Drehgeschwindigkeit der Welle 2 ist, es findet also eine Geschwindigkeitsuntersetzung statt.

Das Exzenterlager 1 weist einen Wälzkörperkäfig 7 auf, der auch als Rollenkäfig, Lagerkäfig oder einfach nur als Käfig bezeichnet werden kann. Der Wälzkörperkäfig 7 ist rohrförmig und weist rechteckige Löcher auf, die als Taschen bezeichnet werden können und in denen die Wälzkörper 5 drehbar aufgenommen sind. Der Wälzkörperkäfig 7 hält die Wälzkörper 5 in ihrem Abstand voneinander. Die Abstände der Wälzkörper 5 voneinander können gleich oder ungleich groß sein.

Der Lagerring 3 weist ein Untermaß auf, d.h. er liegt mit Vorspannung außen an den Wälzkörpern 5 an und drückt diese mit Vorspannung nach innen gegen die Welle 2. Die Vorspannung stellt sicher, dass die Wälzkörper 5 bei einem Drehantrieb der Welle 2 auf dieser und im Lagerring 3 wälzen und um die Welle 2 umlaufen. Da der Lagerring 3 nicht in einer Lageraufnahme eingefasst ist, kann er sich elastisch aus einer Kreisform in eine nicht kreisförmige Ringform biegen. Durch sein Untermaß ist er elastisch so gebogen, dass er an den Stellen, an denen er außen an den Wälzkörpern 5 anliegt, eine stärkere Krümmung und zwischen den Wälzkörpern 5 eine schwächere Krümmung aufweist.

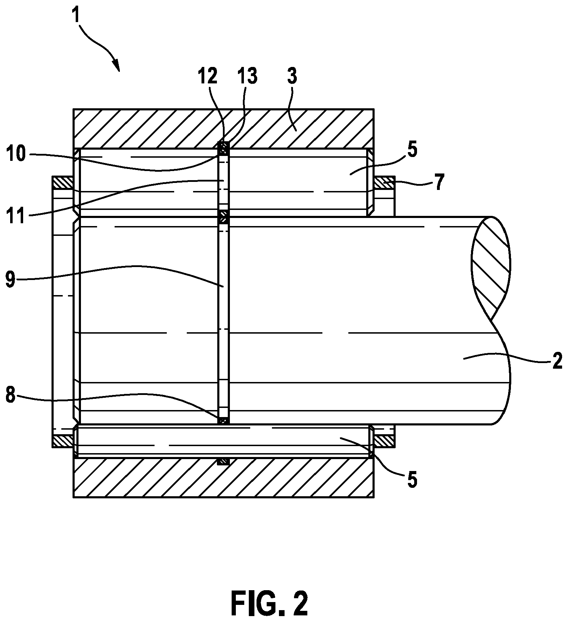

Eine andere Möglichkeit, die Vorspannung zu bewirken, ist ein oder sind mehrere elastische Ringe 8, 10, 12, beispielsweise O-Ringe. Wie insbesondere in Figur 2 erkennbar liegt ein O-Ring als elastischer Ring 8 in einer umlaufenden Nut 9 in der Welle 2 ein. Die Nut 9 ist flacher als der elastische Ring 8 dick ist, so dass der elastische Ring 8 aus der Nut 9 vorsteht. Der elastische Ring 8 drückt gegen die Wälzkörper 5 und bewirkt dadurch die Vorspannung, mit der die Wälzkörper 5 an der Welle 2 bzw. an dem in ihrer Nut 9 einliegenden elastischen Ring 8 und innen am Lagerring 3 anliegen.

Eine weitere Möglichkeit, die Vorspannung zu bewirken, ist ein elastischer Ring 10, der in einer umlaufenden Nut 11 mindestens eines der Wälzkörper 5 einliegt. Die Wirkungsweise des elastischen Rings 10 in der Nut 11 des Wälzkörpers 5 ist die gleiche wie die Wirkung des elastischen Rings 8 in der Nut 9 der Welle 2. Der Wälzkörperkäfig 7 überträgt die Umlaufbewegung von dem Wälzkörper 5, der den elastischen Ring 10 aufweist, auf die anderen Wälzkörper 5, so dass ein elastischer Ring 10 an einem der Wälzkörper 5 genügt, um den Umlauf aller Wälzkörper 5 um die Welle 2 sicherzustellen.

Eine weitere Möglichkeit ist ein elastischer Ring 12 in einer umlaufenden Nut 13 auf der Innenseite des Lagerrings 3. Zur Veranschaulichung sind in der Zeichnung alle drei elastischen Ringe 8, 10, 12 dargestellt, es genügt allerdings einer dieser elastischen Ringe 8, 10, 12 oder das zuvor erläuterte Untermaß des Lagerrings 3 um das Wälzen und den Umlauf der Wälzkörper 5 bei einem Drehantrieb der Welle 2 sicherzustellen.

Außen am Lagerring 3 liegen Pumpenkolben 14 mit ihren Stirnenden am Lagerring 3 an. Die Pumpenkolben 14, von denen in der Zeichnung lediglich Stirnenden dargestellt sind, sind radial zur Welle 2 angeordnet und werden von nicht dargestellten Kolbenfedern von außen gegen den Lagerring 3 gedrückt. Die Pumpenkolben 14 sind in Pumpenbohrungen 15 eines Pumpengehäuses 16 axial verschieblich, d.h. radial zur Welle 2 verschieblich aufgenommen. Das Exzenterlager 1 befindet sich in einem zylindrischen Exzenterraum 17 des Pumpengehäuses 16 zwischen den beiden Pumpenkolben 14, die im Ausführungsbeispiel einander gegenüber, also in Boxeranordnung angeordnet sind. Durch drehenden Antrieb der Welle 2 bewegt sich der Lagerring 3, ohne sich mit der Welle 2 mitzudrehen, mit kleinerer Geschwindigkeit wie der Drehgeschwindigkeit der Welle 2 auf einer Kreisbahn um die Achse 6 und Drehachse der Welle 2. Die Kreisbewegung des Lagerings 3 treibt die Pumpenkolben 14 zu einer Hubbewegung an. Das Exzenterlager 1 wandelt somit eine Drehbewegung der Welle 2 in eine Hubbewegung zum Antrieb der Pumpenkolben 14. Das Pumpengehäuse 16 ist Bestandteil eines sog. Hydraulikblocks, in dem außer den Pumpenkolben 14 weitere, nicht dargestellte hydraulische Bauelemente wie Magnetventile einer Schlupfregeleinrichtung für eine hydraulische Bremsanlage eines Kraftfahrzeugs angeordnet und hydraulisch miteinander verschaltet sind. Solche Hydraulikblöcke sind an sich bekannt und sollen hier nicht weiter erläutert werden.

## Patentansprüche

1. Exzenterlager zum Wandeln einer Drehbewegung in eine Hubbewegung, mit einer drehend antreibbaren Welle (2), mit einem die Welle (2) umschließenden Lagerring (3), und mit Wälzkörpern (5), die in einem Spalt (4) zwischen der Welle (2) und dem Lagerring (3) um die Welle (2) herum angeordnet sind, wobei der Lagerring (3) exzentrisch zur Wel-le (2) ist und die Wälzkörper (5) verschiedene Durchmesser entsprechend einer unterschiedlichen Spaltbreite zwischen der Welle (2) und dem Lagerring (3) aufweisen, **dadurch gekennzeichnet, dass** die Wälzkörper (5) mit einer Vorspannung an der Welle (2) und am Lagerring (3) anliegen.

2. Exzenterlager nach Anspruch 1, **dadurch gekennzeichnet, dass** der Lagerring (3) ein Untermaß aufweist, das die Vorspannung bewirkt, mit der die Wälzkörper (5) an der Welle (2) und am Lagerring (3) anliegen.

3. Exzenterlager nach Anspruch 1, **dadurch gekennzeichnet, dass** die Welle (2) und/oder mindestens ein Wälzkörper (5) einen sie/ihn umschlingenden elastischen Ring (8, 10) aufweist.

4. Exzenterlager nach Anspruch 1, **dadurch gekennzeichnet, dass** der Lagerring (3) einen in ihm einliegenden elastischen Ring (12) aufweist.

5. Exzenterlager nach Anspruch 1, **dadurch gekennzeichnet, dass** das Exzenterlager (1) einen Wälzkörperkäfig (7) aufweist.

## Claims

1. Eccentric bearing for converting a rotary motion into a reciprocating motion, having a shaft (2), which can be driven rotationally, a bearing ring (3), which surrounds the shaft (2), and rolling elements (5), which are arranged around the shaft (2) in a gap (4) between the shaft (2) and the bearing ring (3), wherein the bearing ring (3) is eccentric with respect to the shaft (2) and the rolling elements (5) have different diameters according to a differing gap width between the shaft (2) and the bearing ring (3), **characterized in that** the rolling elements (5) rest against the shaft (2) and the bearing ring (3) under a preload.

2. Eccentric bearing according to Claim 1, **characterized in that** the bearing ring (3) has an undersize, which brings about the preload with which the rolling elements (5) rest against the shaft (2) and the bearing ring (3).

3. Eccentric bearing according to Claim 1, **characterized in that** the shaft (2) and/or at least one rolling element (5) has/have an elastic ring (8, 10) wrapped around it/them.

4. Eccentric bearing according to Claim 1, **characterized in that** the bearing ring (3) has an elastic ring (12) resting therein.

5. Eccentric bearing according to Claim 1, **characterized in that** the eccentric bearing (1) has a rolling element cage (7).

## Revendications

1. Palier excentrique destiné à convertir un mouvement rotatif en un mouvement d'excursion, comprenant un arbre (2) pouvant être entraîné en rotation, comprenant une bague de palier (3) qui entoure l'arbre (2) et comprenant des corps de roulement (5) qui sont disposés autour de l'arbre (2) dans un intervalle (4) entre l'arbre (2) et la bague de palier (3),
la bague de palier (3) étant excentrique par rapport à l'arbre (2) et
les corps de roulement (5) possédant différents diamètres correspondant à une largeur d'intervalle différente entre l'arbre (2) et la bague de palier (3),
**caractérisé en ce que**
les corps de roulement (5) reposent avec une précontrainte contre l'arbre (2) et contre la bague de palier (3).

2. Palier excentrique selon la revendication 1, **caractérisé en ce que** la bague de palier (3) possède une cote minorée qui produit la précontrainte avec laquelle les corps de roulement (5) reposent contre l'arbre (2) et contre la bague de palier (3).

3. Palier excentrique selon la revendication 1, **caractérisé en ce que** l'arbre (2) et/ou au moins un corps de roulement (5) possèdent une bague élastique (8, 10) qui s'enroule autour de celui-ci/ceux-ci.

4. Palier excentrique selon la revendication 1, **caractérisé en ce que** la bague de palier (3) possède une bague élastique (12) qui repose dans celle-ci.

5. Palier excentrique selon la revendication 1, **caractérisé en ce que** le palier excentrique (1) possède une cage de corps de roulement (7).
